(19) Europäisches Patentamt
European Patent Office
Office européen des brevets

(11) **EP 3 247 207 B1**

(12) **FASCICULE DE BREVET EUROPEEN**

(45) Date de publication et mention de la délivrance du brevet:
**18.11.2020 Bulletin 2020/47**

(21) Numéro de dépôt: **16714954.1**

(22) Date de dépôt: **22.01.2016**

(51) Int Cl.:
*A01M 1/06* *(2006.01)*          *A01M 1/02* *(2006.01)*

(86) Numéro de dépôt international:
**PCT/FR2016/050132**

(87) Numéro de publication internationale:
**WO 2016/116717 (28.07.2016 Gazette 2016/30)**

(54) **PIÈGE À MOUSTIQUES COMPLEXE POUR ESPACES EXTÉRIEURS**

**KOMPLEXE MOSKITOFALLE FÜR RÄUME IM FREIEN**

**COMPLEX MOSQUITO TRAP FOR OUTDOOR SPACES**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **23.01.2015 FR 1500142**

(43) Date de publication de la demande:
**29.11.2017 Bulletin 2017/48**

(73) Titulaire: **DIPTERATECH**
**06800 Cagnes sur Mer (FR)**

(72) Inventeurs:
• **HAUPTMANN, Dominique**
  **06570 Saint Paul de Vence (FR)**
• **BENBASSAT, Gérard**
  **06570 Saint Paul de Vence (FR)**

(74) Mandataire: **Dadoun, Aimée**
**TECH@PI**
**Les Espaces Antipolis**
**300, route des Crêtes**
**06902 Sophia Antipolis (FR)**

(56) Documents cités:
FR-A1- 3 006 855          US-A- 5 943 815
US-A1- 2006 179 708          US-B1- 6 467 215

## Description

L'invention concerne un piège a moustiques complexe pour espaces extérieurs.

L'homme cherche depuis longtemps à lutter contre les insectes piqueurs et notamment les moustiques, causes de démangeaisons et vecteurs de maladies. Dans le contexte de la prolifération des moustiques, et notamment des moustiques tigres, il est très important de procurer une protection efficace des personnes contre l'agression des moustiques dans les espaces extérieurs tels que jardins, piscines, parcs et terrasses, et ce sans risque pour la santé et en respectant l'écosystème.

Autant pour des raisons de confort que de santé, des solutions très diverses, pour protéger les personnes dans les espaces extérieurs contre l'agression des moustiques, ont été développées. Elles peuvent être classées en différentes catégories selon leur mode de fonctionnement.

Une première catégorie est constituée d'insecticides sous forme de fumées par combustion lente de supports contenant des substances insecticides ou d'aérosols, qui tuent les moustiques présents dans la zone de diffusion et tiennent les autres à distance mais qui ont l'inconvénient d'avoir des odeurs de combustion assez désagréables et de présenter des risques pour la santé.

Une autre catégorie est constituée par les répulsifs corporels, qui présentent les mêmes types d'inconvénients : désagrément d'avoir un corps généralement gras sur la peau et des risques pour la santé.

Outre les inconvénients mentionnés, ces solutions sont « momentanées », leur durée d'efficacité est typiquement de quelques heures, après quoi il faut renouveler l'insecticide pour que l'efficacité perdure.

Une autre catégorie encore est de s'attaquer aux larves. Il existe en effet différents types de larvicides, plus ou moins respectueux des écosystèmes. Ils permettent de limiter l'extension des colonies de moustiques, mais dans la plupart des cas ils ne peuvent prétendre fournir une protection complète.

Enfin, la catégorie où se situe la présente invention est celle des pièges à moustiques adultes qui attirent et capturent les moustiques femelles qui sont en effet les seules à piquer. Dans cette catégorie, il existe de nombreux modèles.

Les modèles les plus courants utilisent simplement un appât ou leurre, le plus souvent composé d'acides gras, dont l'odeur ressemble à celles émises par la peau et/ou la respiration, pour attirer les moustiques. Lorsque ceux-ci s'approchent du piège, un ventilateur les aspire et les maintient dans un filet ou une sorte de cage d'où ils ne pourront plus s'échapper. Ce type de piège présente l'inconvénient que toutes les espèces de moustiques ne sont pas sensibles aux mêmes combinaisons d'acides gras et de plus la portée de ces pièges est relativement courte, quelques mètres.

Les modèles les plus sophistiqués utilisent plusieurs appâts. L'appât le plus efficace, qui attire toutes les espèces de moustiques à une distance de plusieurs dizaines de mètres (jusqu'à 70 m environ), est le dioxyde de carbone (ci-après abrégé $CO_2$). Pour réaliser ce type de pièges il est plus couramment utilisé deux sources de $CO_2$. Il s'agit soit de la combustion lente de gaz butane ou propane, à l'aide d'un bruleur spécialement conçu pour cela (exemple Mosquito Magnet®, Skeetervac®, Predator®), soit de bouteilles de $CO_2$ comprimé (par exemple Biogents®). En plus de l'appât $CO_2$, il est utilisé aussi un appât à base d'acides gras dont les émanations renforcent le pouvoir attractif du $CO_2$.

Selon les modèles, ces pièges sont censés couvrir 500m$^2$ ou 1000m$^2$, voire 5000m$^2$. La réalité observée est que même avec des pièges efficaces, qui capturent effectivement beaucoup de moustiques, on ne parvient pas, le plus souvent, à éviter les piqures de moustiques dans les espaces extérieurs ou se trouvent l'un de ces pièges. La raison est que les « sources » de moustiques, qui peuvent être à plus de 100 m des espaces couverts par le piège, produisent les moustiques de façon continue et lorsque des personnes se trouvent, par exemple dans le jardin où le piège a été installé, elles vont attirer les moustiques tout autant que le piège, et seront piquées.

En fait, les pièges décrits ci-dessus ont pour effet de réduire la densité des moustiques et, en général, de réduire la fréquence des piqures dans un ratio qui dépasse rarement 50% à 60%. C'est-à-dire qu'au lieu de se faire piquer 10 fois en une heure, sans aucune protection, on ne se fera piquer que 4 ou 5 fois. L'efficacité des pièges décrits n'est donc pas suffisante car ils ne font que détruire des moustiques sans pour autant protéger les personnes.

Certains fabricants, comme la société Biogents®, ont proposé une solution à plusieurs pièges (nommé Eisenhans®) alimentés par une seule bouteille de $CO_2$. Cela augmente le taux de capture des moustiques, réduit un peu plus la densité des moustiques, mais en général seulement sur un espace de quelques centaines de m$^2$. L'inconvénient de cette solution est qu'elle ne parvient pas à éliminer totalement les piqures des moustiques.

On connaît du document brevet US 5,943,815 datant de l'année 1997 un système pour délivrer du dioxyde de carbone ($CO_2$) dans des pièges à moustiques. Le système comprend une source de $CO_2$ gazeuse passant par un tube et alimentant des pièges situés en série.

On connaît également du document brevet US 6,467,215 datant de l'année 2000 un système piège émettant des ondes acoustiques pour attirer des insectes dans une zone proche de la station contrôle. Ce système décrit également des pièges individuels disposés à l'extérieur pour délivrer du $CO_2$ en précisant que des pulsations de $CO_2$ sont émises pendant environ 4-5 minutes toutes les 10 minutes environ par l'utilisation de valves. Les pièges forment un périmètre extérieur d'une zone à protéger et sont disposés tous les 15, 24 m (50 feet) à 91,44 m (300 feet).

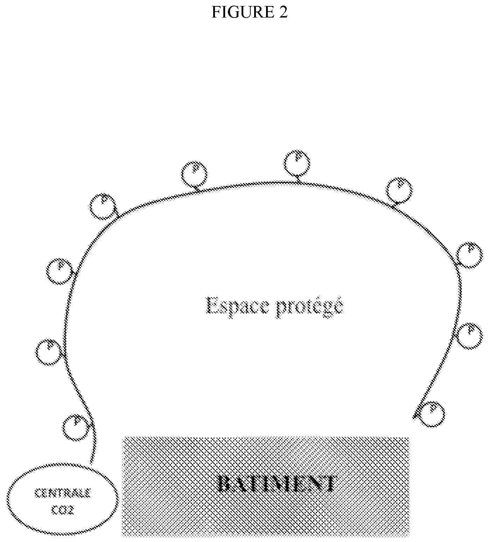

Enfin, on connaît du document US2006/0179708 datant de l'année 2006 un piège à moustique extérieur sophistiqué prenant en compte les différentes variables du climat et comprenant en réseau plusieurs pièges individuels alimentés par du CO2 provenant de brûleur, lesdits pièges étant ouverts ou fermés en fonction des variables du climat. Aucune distance n'est indiquée entre chaque piège formant la ligne de séparation selon la figure 2. Le débit de CO2 n'est pas plus indiqué au niveau des pièges, ni n'est considéré comme une variable importante. Il n'existe aucunement de limiteur de débit dans chaque piège mais seulement une valve, pouvant être ouverte ou fermée, suivant l'analyse des conditions météorologique par le micro-régulateur. Le but de ce piège sophistiqué étant de réguler l'ouverture et la fermeture des différentes valves des pièges individuels extérieurs en fonction des conditions météorologiques.

Comme on peut le voir à la lecture de l'art antérieur, les systèmes de pièges à moustiques actuels cherchent à prendre en compte des paramètres de plus en plus sophistiqués pour éliminer les moustiques, cela étant bien illustré par le document US2006/0179708 qui régule dans chaque piège et par une valve le passage de CO2 en fonction de la vitesse et direction du vent, de la pluie, de l'humidité et de la pression barométrique. Ces systèmes ne sont pas pour autant efficaces pour éviter toute piqûre et éliminer les moustiques.

Dans la mesure où les méthodes utilisées jusqu'à aujourd'hui ne sont pas efficaces totalement pour éviter les piqures de moustiques, et dans le contexte de la prolifération grandissante des moustiques, notamment de l'Aedes Albopictus dit moustique tigre, il s'est avéré important de mettre au point un nouveau piège à moustiques pour espaces extérieurs qui, non seulement détruit les moustiques, mais en plus protège les personnes.

La Demanderesse a mis au point de manière surprenante un nouveau piège à moustiques permettant de répondre à ce double objectif de destruction et de protection, procurant ainsi une véritable défense des personnes contre l'agression des moustiques dans des espaces extérieurs tels que jardins, piscines, parcs et terrasses et ce quelque soient les conditions météorologiques.

L'invention consiste en un piège à moustiques complexe pour espaces extérieurs comprenant :

- plusieurs pièges individuels en réseau alimentés par du CO2, lesdits pièges individuels disposant d'un ventilateur capable de créer un cône d'aspiration pour capturer les moustiques sont disposés le long d'une ligne de séparation séparant les sources potentielles de moustiques des espaces extérieurs à protéger,
- une centrale de distribution de CO2 comprenant la source de CO2 et une unité de contrôle du CO2 qui comprend un régulateur de débit centralisé distribuant le CO2 aux pièges individuels par un réseau de tubes et un limiteur de débit dans chaque piège
- un réseau de distribution de basse tension comprenant un ou plusieurs transformateurs et des fils électriques alimentant les pièges individuels, le piège à moustique complexe comprenant en combinaison:
- une distance entre chaque piège individuel adjacent n'excédant pas 12 mètres,
- un débit de CO2 dans chaque piège individuel compris entre 1 et 2,5 g/h/m de distance entre les pièges adjacents.

De manière surprenant, la Demanderesse a découvert qu'une interdépendance de la distance entre les pièges et du débit de CO2 dans chaque piège, jusqu'à certaines limites de distance et de débit, permet d'aboutir à une solution technique efficace.

La combinaison des éléments techniques du piège à moustiques complexe selon l'invention apporte de manière surprenante une double action contre les moustiques :

- une action d'élimination des moustiques adultes vivant à l'intérieur de l'espace à protéger et entouré ou cerclé par l'ensemble des pièges individuels et
- une action de protection, par un effet barrière à moustiques qui empêche les moustiques venant de l'extérieur de pénétrer dans l'espace à protéger.

Le résultat en est qu'il devient possible de se tenir à l'extérieur, à toute heure, dans le jardin, sur une terrasse ou au bord de la piscine, en plein été, sans crainte de se faire piquer et sans autre protection que celle fournie par l'invention.

Les autres avantages de l'invention sont également que cette protection contre les moustiques:

- est continue, tout au long de la journée et pendant toute la saison où les moustiques sévissent et ce, d'une façon automatique, sans intervention des utilisateurs,
- conduit progressivement à l'élimination des colonies de moustiques vivant à l'intérieur du périmètre protégé,
- est sans risques pour les personnes et les animaux domestiques,
- respecte l'écosystème des espaces extérieurs, et
- ne nécessite pas un système très sophistiqué prenant en compte les variables météorologiques.

Dans la présente invention, on entend par :

- « espaces extérieurs» des espaces tels que piscine, terrasse, jardin situés en plein air.
- « piège individuel» un dispositif solide de forme adéquate attirant et capturant les moustiques sans qu'ils puissent s'échapper une fois à l'intérieur.
- « ligne de séparation » le périmètre ou le cercle délimitant l'espace extérieur à protéger et séparant ainsi la zone source de moustiques et la zone espace extérieur à protéger.

- « g/h/m de distance entre les pièges adjacents » le débit mentionné en gramme par heure et par mètre de distance entre deux pièges situés l'un à côté de l'autre.
- « Unité de contrôle du CO2 », un dispositif électronique et pneumatique permettant de contrôler le débit de CO2 vers l'ensemble des pièges. Le dispositif électronique inclut un système de programmation de la diffusion de CO2, de régulation de débit et éventuellement de télécontrôle et de télésurveillance.
- « Régulateur de débit centralisé », un dispositif électropneumatique qui permet d'ajuster le débit de CO2 centralisé à une valeur désirée. Il comprend notamment un limiteur de débit central. On entend par « centralisé » également dans la description le terme « global ».
- « limiteur de débit dans chaque piège » un dispositif localisé dans chaque piège et destiné à assurer un débit constant et connu de CO2.
- « Centrale de distribution de CO2 » l'emplacement ou se trouve la source de CO2 pour l'ensemble des pièges ainsi que l'unité de contrôle du CO2.
- « Source de CO2 » un ou deux réservoirs de CO2 comprimé ou dispositif permettant de produire du CO2 par l'air ambiant.
- « leurre à moustiques» combinaison d'acides sous forme solide ou liquide permettant la diffusion de molécules olfactives et attractives pour moustiques, mimant l'odeur de la peau des mammifères.
- « réseau de distribution en étoile » un réseau de tubes partant de la centrale de distribution de CO2 et alimentant chaque piège individuel en CO2,
- « réseau de distribution en série» un tube principal partant de la centrale de distribution de CO2 alimentant chacun des pièges individuels en CO2 par une dérivation,
- « un réseau de distribution de basse tension » un réseau de fils électriques alimentant en basse tension chacun des pièges individuels.

L'invention sera mieux comprise avec les dessins joints dans lesquels :

- la figure 1 représente un schéma d'un piège à moustiques complexe avec un réseau de distribution en étoile, comprenant 4 pièges individuels.
- la figure 2 représente un schéma d'un piège à moustiques complexe avec un réseau de distribution en série, comprenant 12 pièges individuels.
- la figure 3 représente un schém d'un piège à moustiques complexe avec un réseau de distribution mixte étoile-série, comprenant 30 pièges individuels.
- la figure 4 représente deux modèles de piège individuel à un (4A) et à deux compartiments (4B).

La présente invention est décrite plus en détail ci-après. Les différents éléments techniques utiles en combinaison pour mettre au point l'invention sont explicités:

Disposition des pièges :

Les pièges sont disposés le long d'une ligne de séparation entourant les espaces extérieurs à protéger. Cette ligne exclue les barrières naturelles que constituent des bâtiments de quelques mètres de hauteur (maison, immeuble, garage, ...) qui sont en général des obstacles suffisant pour empêcher les moustiques de passer.

Distance entre pièges :

Les pièges ainsi disposés le long de cette ligne de séparation doivent être suffisamment proches les uns des autres afin que l'effet barrière à moustique soit efficace. Leur distance optimale dépend en partie du débit de CO2 et d'autre part du risque de présence de sources de moustiques dans tel ou tel axe du périmètre. Dans tous les cas la distance entre deux pièges individuels adjacents ne doit pas excéder 12 mètres.

Ainsi la distance entre chaque piège individuel adjacent dépend du débit de CO2 dans chaque piège et cette distance ne doit pas dépasser 12 mètres. Une interdépendance de la distance entre les pièges et du débit de CO2 dans chaque piège, jusqu'à certaines limites de distance et de débit, est nécessaire à l'efficacité technique du piège à moustiques selon l'invention.

Dans un mode de réalisation préférentiel, la distance entre deux pièges adjacents est comprise entre 5 et 12 mètres.

Selon la densité des moustiques présente dans et à l'extérieur de l'espace à protéger, la distribution des pièges individuels le long de la ligne de séparation sera régulière ou irrégulière. De préférence, la distribution des pièges individuels sera irrégulière pour tenir compte de la variation de densité des moustiques, tout en restant dans une distance entre deux pièges adjacents comprise de préférence encore entre 5 et 10 mètres.

Les pièges individuels disposent d'un ventilateur capable de créer un cône d'aspiration pour capturer les moustiques, ainsi que d'un raccordement à un réseau électrique basse tension et à un réseau de distribution de CO2.

Débit de CO2 :

Le débit de CO2 dans chaque piège doit être compris entre 1 et 2,5 g/h/m de distance entre les pièges adjacents. Le débit de CO2 est de l'ordre de 1,5 g/h/m de distance moyenne entre les pièges d'un dispositif donné pour obtenir une protection de qualité.

Ce débit peut être diminué, jusqu'à 1 g/h/m, lorsqu'on recherche uniquement l'élimination des moustiques, mais qu'il n'y a personne dans les espaces extérieurs à protéger.

Ce débit peut être augmenté jusqu'à 2,5 g/heure/mètre, lorsque l'on recherche une protection accrue, par exemple lorsqu'il y a beaucoup de monde dans les espaces extérieurs à protéger.

Dans un dispositif donné, la distance effective entre les pièges pourra varier en fonction des risques de présence de sources de moustiques autour de la ligne de séparation. La distance entre les pièges pourra être réduite en cas de forte densité de moustiques dans les limites indiquées de manière préférentielle.

Centrale de distribution de CO2 :

Le nombre de pièges pouvant atteindre plusieurs dizaines, il n'est pas concevable d'avoir une alimentation autonome pour chaque piège, que ce soit sous forme de bouteille de gaz butane ou de CO2 comprimé ou tout autre source de CO2. La logistique de remplacement des bouteilles serait beaucoup trop lourde et couteuse. Le choix d'une centrale de distribution de CO2 comprenant la source de CO2, composée d'un ou plusieurs réservoirs de CO2 qui alimentent l'ensemble des pièges individuels, est une des caractéristiques essentielles de l'invention.

Dans un mode de réalisation préféré selon l'invention, la source de CO2 est constituée de un ou deux réservoirs de CO2 comprimé.

Dans un autre mode de réalisation selon l'invention, la source de CO2 est constitué d'un dispositif permettant de produire du CO2 par l'air ambiant. Ce mode de réalisation est mis en œuvre par l'application du procédé de capture de moustiques par production de CO2 à partir de l'air ambiant divulgué dans la demande de brevet publiée sous le numéro FR 3 006 855. Cette invention, déposée par la Demanderesse, est citée pour illustrer une source de CO2 potentielle selon la présente invention.

Unité de contrôle du CO2

L'unité de contrôle de CO2 peut être constituée d'un dispositif électropneumatique comprenant un microcontrôleur, un dispositif de communication à distance type GSM, possiblement un module de communication sans fil à courte distance type wifi, des électrovalves et des capteurs, généralement situé proche du ou des réservoirs de CO2, permettant de contrôler la diffusion de CO2 vers l'ensemble des pièges. Cette unité permet notamment :

- une programmation de la diffusion du CO2, afin d'en réguler la consommation, par rapport à la présence des moustiques et au besoin de protection
- de détecter si le réservoir de CO2 actif est vide afin de basculer automatiquement sur le second
- d'émettre des alarmes.

En effet, l'unité dispose également d'une liaison de type GSM afin de pouvoir d'une part émettre des informations et des alarmes vers une centrale de télésurveillance de l'ensemble des pièges complexes et d'autre part de le contrôler à distance.

Cette unité dispose de capteurs de pression, de débit et éventuellement de contrôle du contenu des réservoirs de CO2 afin de pouvoir détecter d'éventuels disfonctionnements (fuites de CO2, déréglage d'un détendeur ...).

Dans un mode de réalisation préférentiel selon l'invention, l'unité de contrôle de CO2 comprend un limiteur de débit de CO2 global.

Réseau de distribution de basse tension

Les ventilateurs des pièges doivent être alimentés en courant électrique. Pour des raisons de sécurité, ces ventilateurs sont alimentés en basse tension (12V ou 24V). Il faut donc disposer d'au moins un transformateur 220V-basse tension. Comme pour le réseau de CO2, le réseau électrique peut être disposé en étoile ou en série. En pratique, dès que le nombre de pièges excède quelques unités, il est beaucoup plus économique de disposer les pièges en série. Du fait de l'utilisation de la basse tension, selon la distance entre le transformateur et le dernier piège, les pertes en ligne ne sont pas négligeable, et il peut être nécessaire de répartir plusieurs transformateurs le long du réseau de pièges de façon à s'assurer que tous les pièges ont une tension d'alimentation suffisante pour que les ventilateurs puissent faire leur office d'aspiration des moustiques.

Dans un mode de réalisation préféré selon l'invention, les pièges individuels sont alimentés en basse tension par un réseau de distribution en série ou un réseau de distribution mixte série-étoile. Ce réseau de distribution de basse-tension peut suivre le réseau de tubes distribuant le CO2 aux pièges individuels.

Limiteur de débit de CO2 au niveau de chaque piège:

Le CO2 est fourni par la centrale de distribution de CO2 à une pression constante qui est ajustée par un détendeur. Le débit au niveau de chaque piège est assuré par un limiteur de débit qui est constitué d'une restriction calibrée de telle sorte qu'elle laisse passer le débit désiré en fonction de la pression d'entrée. Ce limiteur de débit peut être de type variable, avec un pointeau réglable par vis, ou bien de type fixe. Par exemple, un limiteur de débit fixe peut être constitué d'un bouchon de métal fritté, calibré pour laisser passer un débit gazeux déterminé en fonction de la pression d'entrée.

Dans un mode de réalisation préféré selon l'invention, chaque piège individuel comprend un leurre à moustiques. Ces leurres se présentent sous forme de solides ou de granulés imprégnés des acides qui se diffusent de façon progressive pendant un à plusieurs mois (par exemple ceux commercialisés par la société Biogents). Dans un autre mode de réalisation, les acides composants le leurre peuvent être contenus dans un récipient centralisé et diffusés progressivement vers l'ensemble des pièges, par exemple mélangé au CO2 et utilisant les mêmes tubes de distribution.

Dans un autre mode de réalisation préférentiel, le piège à moustiques complexe selon l'invention comprend de 4 à plusieurs dizaines de pièges individuels.

Trois variantes différentes de topologie du réseau de distribution de CO2 peuvent être utilisées selon le nombre de pièges individuels et la configuration des espaces extérieurs à protéger. Ces variantes sont des modes de réalisation préférentiels selon l'invention.

**- Réseau en étoile.**

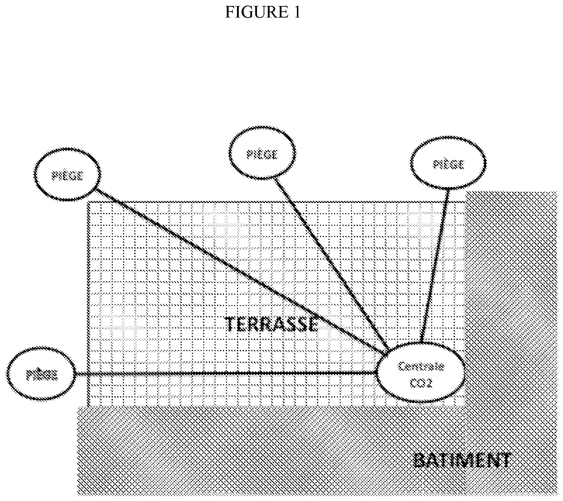

A partir de la centrale de distribution de CO2, le CO2 peut être distribué à l'aide d'un réseau en « étoile », c'est-à-dire avec un tube individuel pour le CO2 allant du réservoir de CO2 vers chaque piège. Cette topologie présente l'avantage qu'un problème de distribution du CO2 vers un piège, par exemple un tube percé ou bouché, ne se répercute pas sur l'alimentation des autres pièges. Cette topologie est illustrée dans la figure 1.

**- Réseau en série.**

Un tube principal partant du réservoir de CO2, alimente tous les pièges, chacun d'eux étant alimenté par une dérivation sur le tube principal. Cette topologie est illustrée dans la figure 2.

**- Réseau mixte étoile-série.**

La topologie peut également être mixte, c'est à dire que plusieurs branches peuvent partir, soit du réservoir de CO2, soit d'un point quelconque du réseau. Cela dépend d'une part de la dimension totale de la ligne de séparation encerclant les espaces extérieurs et d'autre part de la disposition des pièges.

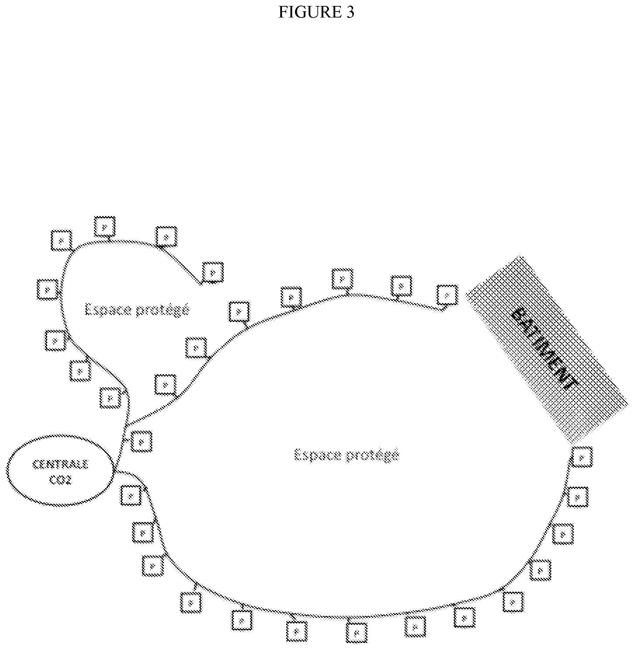

Par exemple, si la ligne de séparation fait plusieurs centaines de mètres, il y a intérêt à placer la centrale de distribution de CO2 au milieu des espaces extérieurs à protéger et créer deux branches d'alimentation en série en CO2, pour éviter les pertes de charges le long du tube de CO2. D'autre part, selon la disposition des pièges, il peut être utile de créer ponctuellement un réseau en étoile à certains points du réseau pour éviter de trop grandes longueurs de tube. Un exemple de cette topologie est illustré dans la figure 3.

Dans un mode de réalisation préférentiel, les pièges individuels sont alimentés en CO2 par un réseau de distribution en série ou un réseau de distribution mixte étoile-série.

Contrôle du débit de CO2 global :

Le débit de chaque piège étant contrôlé par un limiteur de débit individuel, le débit total ou centralisé est la somme des débits de chaque piège. Un limiteur de débit global ou centralisé est donc avantageusement placé sur l'installation pour deux raisons:

- en cas de fuite due, par exemple, à une rupture d'un tube, pour éviter que le réservoir de CO2 ne se vide très rapidement.
- pour permettre de réaliser de façon économique un contrôle précis de débit global variable comme expliqué ci-après.

Le principe du contrôle de débit global est de placer un limiteur de débit global ou centralisé de type variable au départ de la distribution du CO2 vers les pièges. Ce type de limiteur est basé sur le fait que le débit de gaz à travers une constriction dépend de la différence de pression entre les pressions aval et amont, selon les formules suivantes:

Avec : $Q_n$ = Débit de gaz à 0°C et 1013 mbar
$P_n$ = densité du gaz à 0°C et 1013 mbar
$\Delta P$ = pression différentielle (bar)
$P1$ = pression en amont (bar absolu)
$P2$ = pression en aval (bar absolu)
$T1$ = température en amont (°K)
Si $P2 > P1/2$

$$Kv = \frac{Q_n}{514} \cdot \sqrt{\frac{\rho_n \cdot T1}{\Delta P \cdot P2}}$$

Si $P2 < P1/2$

$$Kv = \frac{Q_n}{257} \cdot \sqrt{\frac{\rho_n \cdot T1}{P1}}$$

Dans un mode de réalisation préféré selon l'invention, on fera en sorte que la pression absolue en amont du limiteur soit supérieure au double de la pression absolue en aval, le débit obtenu ne dépend pas de la pression en aval, mais uniquement de la pression en amont. Ainsi, le débit de CO2 global peut être contrôlé de façon précise et ajusté proportionnellement au rapport cyclique d'ouverture et fermeture d'une électrovalve à deux positions.

Le control de débit de CO2 global est effectué d'une part par le rapport cyclique d'ouverture/fermeture d'une valve à deux positions et d'autre part par l'application une pression absolue de $CO_2$ en sortie de l'unité de contrôle, et en amont d'un limiteur de débit fixe, supérieure au double de la pression absolue en aval.

Ainsi, le piège à moustiques complexe selon l'invention est caractérisé préférentiellement en ce que le débit de $CO_2$ centralisé est ajusté proportionnellement au rapport cyclique d'une électrovalve à deux positions et par l'application d'une pression absolue de $CO_2$ en amont du limiteur de débit centralisé supérieure au double de la pression absolue en aval.

Cette caractéristique peut avantageusement être très utile, car en cas de fuite importante quelque part sur le réseau, la pression de gaz dans le tube principal va chuter, elle peut éventuellement descendre au niveau de la pression atmosphérique ambiante. Si la pression en amont du limiteur de débit est égale à plus du double de la pression en aval, en cas de fonctionnement normal, alors en cas de fuite, et de chute de pression en aval du limiteur, le débit n'augmente pas.

Ainsi, dans ce mode de réalisation préférentiel, une fuite aura donc pour effet de réduire le débit de $CO_2$ vers les pièges, mais cela ne videra pas le réservoir de $CO_2$ plus rapidement que la normale.

Par exemple, si en fonctionnement normal, la pression absolue en sortie du limiteur doit être réglée à 1,7 bars, pour obtenir les débits souhaités au niveau des pièges, alors la pression absolue en amont sera établie à une valeur supérieure de 3,4 bars.

Le second intérêt de ce limiteur, utilisé dans ces conditions de pression, est de permettre un ajustement de débit avec une simple valve électromagnétique. En effet, si on ouvre et ferme une valve de façon cyclique, par exemple 10s ouverte et 10s fermée, on pourrait intuitivement penser que cela divise le débit par un facteur 2. Cela est vrai, si on place un limiteur de débit après la valve. Sinon, pendant la période de fermeture de la valve, le $CO_2$ contenu dans le tube principal continu de s'écouler vers les pièges et la pression dans le tube diminue. Lorsque la valve s'ouvre à nouveau, en l'absence de limiteur de débit, le détendeur va remplir à nouveau le tube avec un débit aussi élevé qu'il le permet, jusqu'à ce que la pression dans le tube soit rétablie. Ainsi on obtient un débit moyen, qui est beaucoup plus élevé que la moitié du débit en régime stable. Par contre, avec le limiteur de débit réglé comme expliqué ci-dessus, le débit maximum étant égal au débit en régime stable, on obtient vraiment un débit moyen proportionnel au rapport cyclique d'ouverture fermeture de la valve.

Cela remplace un régulateur de débit électronique, utilisant une valve proportionnelle et boucle de contrôle de cette valve. Ce type de régulateur est au moins 10 fois plus couteux qu'une simple valve électromagnétique à deux positions.

Programmation de la diffusion de $CO_2$

Le $CO_2$ en bouteille représente un cout de fonctionnement non négligeable, tant du point de vue du coût de la matière que de la logistique, il est très utile de limiter les périodes et les intensités de diffusion de $CO_2$ de sorte d'obtenir un maximum d'efficacité pour un minimum de consommation de $CO_2$.

Par exemple, si le moustique le plus abondant est le « tigre » (Aedes Albopictus), il est inutile de diffuser du $CO_2$ pendant la nuit, car ce moustique a une activité diurne uniquement. Les périodes de lever et coucher du soleil sont les moments de plus grande activité de la plupart des moustiques (y compris les « tigres »), il est donc utile de diffuser du $CO_2$ à ces moments. Il est utile de diffuser plus de $CO_2$ pendant les périodes où les personnes sont présentes dans la zone à protéger, il est donc utile de pouvoir moduler l'intensité de la diffusion de $CO_2$ selon les moments souhaités.

Ainsi, dans un mode de réalisation préféré selon l'invention, plusieurs dispositifs sont associés au piège à moustiques complexe:

- un programmateur journalier ou hebdomadaire de diffusion permettant de définir des plages horaires et des intensités de diffusion pour chaque jour de la semaine,
- une télécommande permettant de contrôler la diffusion, en plus de la programmation journalière ou hebdomadaire. Cette télécommande est réalisée soit par un système radiofréquence classique, soit par un téléphone portable.

Cette fonction de programmation de la diffusion de $CO_2$ est réalisée avec une électrovalve commandée par un programmateur électronique.

Télécontrôle et télésurveillance

La programmation de la diffusion de $CO_2$ exige de la part de l'utilisateur du piège à moustiques complexe selon l'invention une certaine compréhension du comportement des moustiques afin d'optimiser l'efficacité de la protection selon ses habitudes de vie. Certains utilisateurs, privés ou institutionnels, souhaitent se décharger de la responsabilité de cette programmation sur le prestataire de service ayant installé le piège à moustique complexe. Ainsi, dans un mode de réalisation préféré selon l'invention, l'unité de contrôle de $CO_2$ est contrôlable et programmable à distance par l'installateur.

Cette fonction est réalisée par l'adjonction d'un module GSM dans l'unité de programmation et d'un microcontrôleur permettant de gérer les protocoles M2M.

L'adjonction de ce module GSM permet également de réaliser une télésurveillance du fonctionnement, par l'ajout de capteurs appropriés et l'envoi d'alarmes.

Par exemple, un capteur de pression, ou un pressostat, placé sur le circuit d'alimentation de $CO_2$ permet de détecter si la réserve de $CO_2$ est vide ou non dans le cas où il s'agit de bouteilles comprimées de $CO_2$. Un capteur de débit ou un capteur de poids, placé sous la réserve de CO2 par exemple, permet de calculer ce qu'il reste dans la réserve de CO2 et de le communiquer au prestataire de service afin d'anticiper les changements de bouteille de CO2.

Un écart entre la consommation réelle de CO2 et la consommation théorique, telle que programmée, permet de détecter des problèmes de diffusion de CO2 comme notamment une fuite ou au contraire un tuyau bouché, et ainsi d'alerter le prestataire de service.

Par exemple, si le tube principal s'est coudé, du fait d'un déplacement de piège ou autre transformation du réseau, après les premiers pièges, le débit total devient beaucoup plus faible que prévu. Ou bien encore si une fuite survient dans l'unité de contrôle du CO2, par exemple sur une valve, le réservoir actif va se vider plus vite que la mesure du débit ne permet de le prévoir.

Une pression de CO2 anormale en sortie d'un détendeur, trop haute ou trop basse, permet donc de détecter un disfonctionnement possible d'un détendeur ou une fuite et d'envoyer une alarme.

Une pression de CO2 en sortie du limiteur de débit trop faible est une indication d'une fuite possible dans le tube principal. Au contraire une pression trop élevée indique un blocage du tube principal.

Multi-réserves de CO2 :

Pour éviter les ruptures d'alimentation en CO2 du piège à moustiques complexe selon l'invention et faciliter la logistique de remplacement ou de remplissage des bouteilles, ou des réserves de CO2, il est très utile de disposer d'au moins deux réserves et de basculer automatiquement de la réserve active vers une seconde, lorsque la première est vide. Le prestataire étant prévenu par le système de télésurveillance, il peut programmer son intervention.

Amélioration des modules-pièges : pièges à deux compartiments

Afin d'augmenter le taux de capture des pièges, pour une même quantité de CO2 et le même leurre, un mode de réalisation préférentiel est proposé dans la façon dont le CO2 est diffusé.

Comme il a été dit ci-avant, les moustiques disposent de capteurs de CO2 qui leur permettent de détecter la direction du gradient de concentration de CO2, de sorte qu'ils peuvent se rapprocher de son émetteur. Autrement dit, les moustiques cherchent à se rapprocher du point de plus haute concentration de CO2 et plus particulièrement du mélange CO2 / acides gras. Le but de ce mode de réalisation préféré est précisément d'augmenter la concentration de ce mélange à proximité du piège, sans augmenter le débit de CO2 ni d'acides gras.

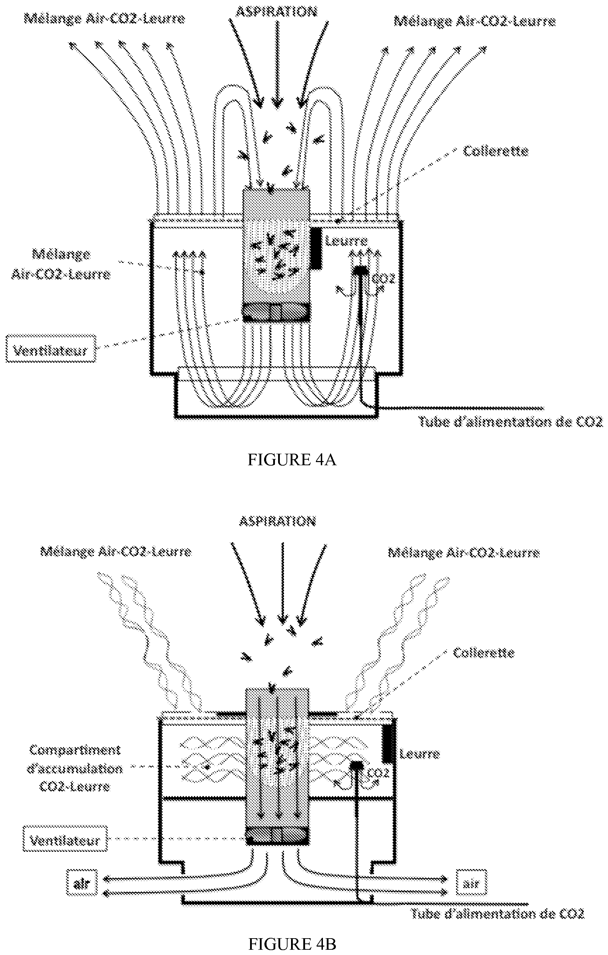

Dans la version classique du piège à moustiques complexe selon l'invention, le flux d'aspiration créé par le ventilateur engendre une surpression à l'intérieur du corps du piège, qui est fermé en bas et sur les cotés, et ressort à travers une grille qui referme le piège par le dessus. Le CO2 est amené par un tube à l'intérieur du piège et le « leurre », composé d'acides gras, est également situé dans le piège, à proximité du flux d'air. De la sorte, c'est un mélange air-CO2-leurre qui passe à travers la grille. Cette grille est calibrée de sorte que le flux d'air soit suffisamment lent pour ne pas contrarier l'approche des moustiques. Ce piège individuel est schématisé en figure 4 avec 1 compartiment.

Dans un mode de réalisation préférentiel selon l'invention, l'amélioration de ce piège consiste à séparer l'intérieur du piège en deux compartiments, inférieur et supérieur, comme dans le schéma donné dans la figure 4B. Dans le compartiment supérieur, il n'y a plus de flux d'air important, seul l'alimentation en CO2 est présente. Par conséquent, il se produit une accumulation de molécules de CO2 et d'acides gras du leurre. Ces molécules finissent quand même par s'échapper par le dessus du piège, à travers la grille. L'avantage de ce mode de réalisation à 2 compartiments est que les concentrations de CO2 et de molécules d'acides gras à la surface de la grille sont beaucoup plus importantes que dans le schéma classique. Cela incite donc davantage les moustiques à se rapprocher de la surface de la grille et du cône d'aspiration et augmente ainsi le taux de capture. Le compartiment inférieur est muni d'orifices suffisamment grands pour écouler le flux du ventilateur, sans surpression dans le compartiment. De la sorte le même ventilateur produit un flux plus important que dans le schéma précédent. Ceci accroit également le taux de capture. Un disque solide est placé autour du cône d'aspiration, de façon à réduire la quantité de mélange CO2 - leurre entrainé par le flux d'aspiration. L'effet d'attraction à longue distance et l'effet barrière restent inchangés, car la même quantité de CO2 et de leurre sont émises par chaque piège.

Enfin, un autre objet selon l'invention est l'utilisation du piège à moustiques complexe selon l'invention pour éliminer les moustiques présents dans un espace extérieur et empêcher de nouveaux moustiques d'y pénétrer.

Les caractéristiques essentielles selon l'invention et des modes de réalisation préférentiels ont été exposées ci-dessus. Une explication du mode de fonctionnement de la double action protectrice du piège à moustique complexe selon l'invention est donnée ci-après.

Le pouvoir attractif du CO2 opère jusqu'à plusieurs dizaines de mètres de distance de son point d'émission, de l'ordre de 70 à 80 m. Les acides gras ont une action attractive, en particulier combinée au CO2, à plus courte distance, de l'ordre de quelques mètres.

En l'absence de personnes à l'intérieur des espaces extérieurs à protéger, les pièges attirent les moustiques situés autant à l'intérieur qu'à l'extérieur de ces espaces, selon le sens du vent. Dans la mesure où les pièges encerclent les espaces extérieurs le long de la ligne de séparation, quelque soit le sens du vent, les moustiques vont être attirés à sa périphérie et capturés par les pièges. Les espaces extérieurs vont progressivement se vider des moustiques qui pouvaient y séjourner.

Lorsqu'il y a une ou plusieurs personnes dans les espaces extérieurs à protéger, le CO2 émis par ces personnes, en plus de celui émis par les pièges, va attirer des moustiques qui peuvent être situés en dehors de l'espace. Lorsque les moustiques remontent les couloirs de CO2, ils vont fatalement se diriger vers la ligne des pièges. Si la distance entre les pièges et le débit de CO2 de chaque piège respectent les caractéristiques selon l'invention, l'odeur combinée du CO2 et du leurre donne l'illusion aux moustiques que les proies qu'ils ont perçues de loin sont dans les pièges, ils vont rester au niveau des pièges, chercheront à se rapprocher au plus près des fausses proies pour les piquer et finiront par être capturés.

Exemple de la protection contre les moustiques tigres, en été, d'une terrasse.

Une terrasse est délimitée du coté Nord par une maison, du coté Est par un bassin avec beaucoup de végétation, du coté Sud par une vaste étendue de gazon et du coté Ouest par de la végétation.

La ligne des pièges démarre à l'extrémité SE de la maison pour se terminer à l'extrémité SO. Du coté Est, avec le risque d'une forte densité de moustiques, 5 pièges seront disposés, à 5 m de distance les uns des autres. Sur le coté sud, peu susceptible d'abriter des colonies de moustiques importantes, 5 pièges seront disposés à 10m les uns des autres, et sur le coté ouest, 5 pièges seront disposée à 7,5m de distance.

La diffusion de CO2 sera programmée en fonction de l'utilisation de la terrasse par les personnes et des périodes d'activité maximum des moustiques.

Par exemple le CO2 sera diffusé au lever du soleil, pendant une heure, car cela correspond à une période d'activité des moustiques Cependant, à cette heure matinale il n'y a personne sur la terrasse, par conséquent un débit modéré est suffisant pour capturer les moustiques, sans avoir à protéger de personnes. Le débit total est limité à 75g/heure, soit 75/15 = 5 g/heure/piège, ce qui correspond à 5/5 = 1 g/h/m pour les pièges du SE, 5/10 = 0,5 g/h/m pour les pièges situés au Sud et 5/7,5 = 0,67 g/h/m pour les pièges du SO.

Puis la diffusion reprend à 10H, jusqu'à 14H, avec un débit total de 150g/heure, soit 10g/h/piège car les personnes utilisent la terrasse pendant cette période et les moustiques sont relativement actifs (le calcul du débit individuel de chaque piège en terme de g/h/m est calculé comme précédemment).

Puis, entre 14H et 16H, la diffusion continue à 75 g/heure soit 5 g/h/piège, car les moustiques sont moins actifs aux heures les plus chaudes de la journée. Ensuite, entre 16H et 18H, le débit est augmenté à 10g/h/piège (150g/h débit total) car les moustiques deviennent plus actifs, et on pourrait également augmenter le débit jusqu'à 15g/h/piège (débit total 225 g/h) entre 18H et 21H qui correspond à l'heure de l'apéritif et du diner sur la terrasse.

Finalement, la diffusion de CO2 est stoppée après 21H et le coucher du soleil.

Dans une réalisation possible, pour ces différents cas de fonctionnement, le régulateur de débit utilisant une électrovalve à 2 positions est ajusté des façons suivantes :

- Détendeur ajusté à 3,5 bars de pression absolue,
- Limiteur de débit central ajusté à 300g/heure de CO2 lorsque la valve est ouverte de façon continue,
- La pression absolue en aval du limiteur de débit s'établit à 1,7 bars,

Cycle 4s ouvert 16s fermé, pour obtenir un débit de 75g/heure, 10s ouvert et 10s fermé pour obtenir 150g/heure, 15s ouvert et 5s fermé pour obtenir 225g/heure.

## Revendications

1. Piège à moustiques complexe pour espaces extérieurs comprenant :

   - plusieurs pièges individuels en réseau alimentés par du CO2, les dits pièges individuels disposant d'un ventilateur capable de créer un cône d'aspiration pour capturer les moustiques sont disposés le long d'une ligne de séparation séparant les sources potentielles de moustiques des espaces extérieurs à protéger,
   - une centrale de distribution de CO2 comprenant la source de CO2 et une unité de contrôle du CO2 qui comprend un régulateur de débit centralisé distribuant le CO2 aux pièges individuels par un réseau de tubes et un limiteur de débit dans chaque piège,
   - un réseau de distribution de basse tension comprenant un ou plusieurs transformateurs et des fils électriques alimentant les pièges individuels,

   **caractérisé en ce qu'il comprend en combinaison:**

   - une distance entre chaque piège individuel adjacent n'excédant pas 12 mètres, et
   - un débit de CO2 dans chaque piège individuel compris entre 1 et 2,5 g/h/m de distance entre les pièges adjacents.

2. Piège à moustiques complexe selon la revendication 1 **caractérisé en ce que** chaque piège individuel comprend également un leurre à moustiques.

3. Piège à moustiques complexe selon la revendication 1 ou 2 **caractérisé en ce qu'**il comprend de 4 à plusieurs dizaines de pièges individuels.

4. Piège à moustiques complexe selon la revendication 3 **caractérisé en ce que** les pièges individuels sont alimentés en CO2 par un réseau de distribution en série ou un réseau de distribution mixte étoile-série.

5. Piège à moustiques complexe selon l'une quelconque des revendications 1 à 4 **caractérisé en ce que** la source de CO2 comprend un ou deux réservoirs de CO2 comprimé.

6. Piège à moustiques complexe selon l'une quelconque des revendications 1 à 4 **caractérisé en ce que** la source de CO2 comprend un dispositif permettant de produire du CO2 à partir de l'air ambiant.

7. Piège à moustiques complexe selon l'une quelconque des revendications précédentes **caractérisé en ce que** le débit de CO2 dans chaque piège individuel est de 1 ou 1,5 ou 2,5 g/h/m de distance entre les pièges adjacents.

8. Piège à moustiques complexe selon l'une quelconque des revendications précédentes **caractérisé en ce que** le débit de CO2 centralisé est ajusté proportionnellement au rapport cyclique d'une électrovalve à deux positions et par l'application d'une pression absolue de CO2 en amont du régulateur de débit centralisé supérieure au double de la pression absolue en aval.

9. Piège à moustiques complexe selon l'une quelconque des revendications précédentes **caractérisé en ce que** chaque piège individuel comprend deux compartiments séparés permettant la concentration du CO2 et du leurre à la surface dudit piège individuel.

10. Utilisation du piège à moustiques complexe selon l'une quelconque des revendications précédentes pour éliminer les moustiques présents dans un espace extérieur et empêcher de nouveaux moustiques d'y pénétrer.

**Patentansprüche**

1. Komplexe Mückenfalle für Außenbereiche, umfassend:

    - mehrere vernetzte einzelne Fallen sind mit CO2 versorgt, wobei die genannten einzelnen Fallen, die über einen Ventilator verfügen, der geeignet ist, einen Ansaugbonus zum Fangen der Mücken zu schaffen, _entlang einer Trennlinie angeordnet sind, die die potenziellen Mückenquellen von den zu schützenden Außenbereichen trennen,
    - eine Verteilerzentrale des CO2, umfassend die CO2-Quelle und eine Steuereinheit des CO2, die einen zentralisierten Durchsatz umfasst, der das CO2 an die einzelnen Fallen durch ein Röhrennetz und einen Durchsatzbegrenzer in jeder Falle verteilt,
    - ein Niedrigspannungs-Verteilernetz, umfassend einen oder mehrere Transformator(den) und elektrische Drähte, die die einzelnen Fallen versorgen,

    **dadurch gekennzeichnet, dass es in Verbindung umfasst:**

    - eine Entfernung zwischen jeder anliegenden einzelnen Falle, die 12 Meter nicht überschreitet, und
    - einen CO2-Durchsatz in jeder einzelnen Falle, der zwischen 1 und 2,5 g/h/m Entfernung zwischen den anliegenden Fallen inbegriffen ist.

2. Komplexe Mückenfalle gemäß Anspruch 1, **dadurch gekennzeichnet, dass** jede einzelne Falle ebenfalls einen Mückenköder umfasst.

3. Komplexe Mückenfalle gemäß Anspruch 1 oder 2, **dadurch gekennzeichnet, dass** sie 4 bis mehrere Dutzend einzelne Fallen umfasst.

4. Komplexe Mückenfalle gemäß Anspruch 3, **dadurch gekennzeichnet, dass** die einzelnen Fallen durch ein serielles oder vernetztes Verteilernetz in gemischter Stern-Serien-Verteilung mit CO2 versorgt sind.

5. Komplexe Mückenfalle gemäß irgendeinem der Ansprüche 1 bis 4, **dadurch gekennzeichnet, dass** die CO2-Quelle einen oder zwei komprimierte(n) CO2-Tank(s) umfasst.

6. Komplexe Mückenfalle gemäß irgendeinem der Ansprüche 1 bis 4, **dadurch gekennzeichnet, dass** die CO2-Quelle eine Vorrichtung umfasst, die das Produzieren von CO2 aus der Umgebungsluft ermöglicht.

7. Komplexe Mückenfalle gemäß irgendeinem der voranstehenden Ansprüche, **dadurch gekennzeichnet, dass** der CO2-Durchsatz in jeder einzelnen Falle 1 oder 1,5 oder 2,5 g/h/m Entfernung zwischen den anliegenden Fallen beträgt.

8. Komplexe Mückenfalle gemäß irgendeinem der voranstehenden Ansprüche, **dadurch gekennzeichnet, dass** der genannte zentralisierte CO2-Durchsatz proportional zum zyklischen Verhältnis eines Magnetventils mit zwei Positionen und durch die Anwendung eines absoluten CO2-Drucks vor dem zentralisierten Durchsatzregulator ist, der größer ist als das Doppelte des nachgeschalteten absoluten Drucks.

9. Komplexe Mückenfalle gemäß irgendeinem der voranstehenden Ansprüche, **dadurch gekennzeichnet, dass** jede einzelne Falle zwei getrennte Fächer umfasst, die die Konzentration des CO2 und des Köders an der Oberfläche der genannten einzelnen Falle trennen.

10. Verwendung der komplexen Mückenfalle gemäß irgendeinem der voranstehenden Ansprüche zum Eliminieren der Mücken, die in einem Außenraum vorhanden sind, und zum Verhindern, dass neue Mücken dort eindringen.

**Claims**

1. A complex mosquito trap for outdoor spaces comprising:

   - several individual traps in an array supplied with $CO_2$, said individual traps comprising a ventilator capable to create an intake cone to attract and catch mosquitoes being arranged along a separation line separating the potential mosquito sources from the outdoor spaces to be protected,
   - a $CO_2$ distribution station comprising the $CO_2$ source and a $CO_2$ control unit that comprises a central flow controller distributing $CO_2$ to the individual traps by an array of tubes and a flow limiter in each trap,
   - a low-voltage distribution network comprising one or more transformers and electrical wires supplying the individual traps,

   **wherein:**

   - a distance between each individual adjacent trap does not exceed 12 meters, and
   - a $CO_2$ flow in each individual trap is between 1 and 2.5 g/h per meter of distance between adjacent traps.

2. The complex mosquito trap according to claim 1, wherein each individual trap also comprises a mosquito lure.

3. The complex mosquito trap according to claim 1 or 2, wherein it comprises from 4 to several dozens of individual traps.

4. The complex mosquito trap according to claim 3, wherein the individual traps are supplied with $CO_2$ by an in-series distribution network or a mixed in-series/star distribution network.

5. The complex mosquito trap according to any of the claims from 1 to 4, wherein the $CO_2$ source comprises one or two tanks of compressed $CO_2$.

6. The complex mosquito trap according to any of the claims from 1 to 4, wherein the $CO_2$ source comprises a device capable of producing $CO_2$ from ambient air.

7. The complex mosquito trap according to any of the previous claims, wherein the $CO_2$ flow in each individual trap is at 1 or 1,5 or 2,5 g/h per meter of distance between the adjacent traps.

8. The complex mosquito trap according to any of the previous claims, wherein the centralized $CO_2$ flow is adjusted in proportion to a cyclic opening and closing of a two-position electro-valve and by an application of an absolute pressure of $CO_2$ upstream of the centralized flow limiter greater than double the absolute pressure downstream.

9. The complex mosquito trap according to any of the previous claims, wherein each individual trap comprises two separate compartments enabling the concentration of $CO_2$ and lure at a surface of said individual trap.

10. Use of the complex mosquito trap according to any of the previous claims, in order to eliminate mosquitoes present in an outdoor space and prevent more mosquitoes from penetrating therein.

FIGURE 1

FIGURE 2

FIGURE 3

Mélange Air-CO2-Leurre

ASPIRATION

Mélange Air-CO2-Leurre

Collerette

Leurre

Mélange
Air-CO2-Leurre

CO2

Ventilateur

Tube d'alimentation de CO2

FIGURE 4A

ASPIRATION

Mélange Air-CO2-Leurre

Mélange Air-CO2-Leurre

Collerette

Compartiment
d'accumulation
CO2-Leurre

Leurre

CO2

Ventilateur

air

air

Tube d'alimentation de CO2

FIGURE 4B

EP 3 247 207 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5943815 A
- US 6467215 B
- US 20060179708 A
- FR 3006855